# EUROPÄISCHE PATENTSCHRIFT

(11) **EP 0 704 869 B1**
(45) Veröffentlichungstag und Bekanntmachung des Hinweises auf die Patenterteilung: **18.03.1998**
(21) Anmeldenummer: 95114753.7
(22) Anmeldetag: 19.09.1995
(51) Int. Cl.: H01G 4/35, H01G 4/38

(54) **Mehrfach-Durchführungskondensator**
Multiple feed-through capacitor
Condensateur avec traversées multiples

(30) Priorität: 20.09.1994 DE 4433539
(43) Veröffentlichungstag der Anmeldung: 03.04.1996
(73) Patentinhaber: SIEMENS MATSUSHITA COMPONENTS GmbH & CO KG, 81617 München (DE)
(72) Erfinder: Aufleger, Peter, Dipl.-Ing., D-89542 Herbrechtingen (DE)
(74) Vertreter: Fuchs, Franz-Josef, Dr.-Ing.

(56) Entgegenhaltungen:
- DE-A- 4 311 124
- FR-A- 2 606 207

## Beschreibung

Die Erfindung betrifft einen Mehrfach-Durchführungskondensator für Leitungen mit einem N-Leiter und n (n≥1) Phasenleitern sowie gegebenenfalls einem PE-Leiter für EMV- und Schutzfilter zum Einsatz bei geschirmten Räumen, Systemen und Anlagen, der HF-dicht in ein metallisches Gehäuse eingebaut ist und aus zumindest jeweils einem X- und Y-Kondensator besteht, die als Wickelkondensatoren ausgebildet sind und an ihren Stirnseiten Stirnkontaktschichten aufweisen.

Derartige Kondensatoren sind aus der nicht vorveröffentlichten DE 43 11 124 A1 bekannt.

Um hochwertige Schutzfilter (Schutzeinheiten) für geschirmte Räume, Systeme und Anlagen für Frequenzen ab einigen MHz bis zu mehreren GHz herzustellen, werden Mehrfach-Durchführungskondensatoren bzw. Mehrfach-Durchführungsfilter benötigt. Bisher gibt es für diese spezielle Anwendung keine Sonderkondensatoren, so daß eine sehr komplizierte Fertigung für beispielsweise einen 4-fach-Durchführungskondensator notwendig ist. Aufgrund dieser speziellen Fertigung ist das Volumen dieser Mehrfach-Durchführungskondensatoren wegen der sehr großen räumlichen Abmessungen relativ groß, woraus hohe Fertigungskosten resultieren.

Aufgabe der vorliegenden Erfindung ist es, einen Mehrfach-Durchführungskondensator der eingangs genannten Art anzugeben, der sich durch ein verringertes Volumen auszeichnet.

Diese Aufgabe wird erfindungsgemäß dadurch gelöst, daß beim eingangs angeführten Mehrfach-Durchführungskondensator an einer Stirnseite des Y-Kondensator für jeden Phasenleiter ein X-Kondensator mit seiner einen Stirnseite angeordnet ist, daß die zueinander angeordneten Stirnkontaktschichten der X- und Y-Kondensatoren großflächig miteinander verbunden sind, daß an diesen Stirnkontaktschichten der N-Leiter großflächig angeschlossen ist, daß der N-Leiter durch die Mitte des Y-Kondensators durchgeführt ist, daß der jeweilige Phasenleiter durch ein Kernloch des X-Kondensators geführt und auf der durch die Stirnkontaktschicht des X-Kondensator definierten Phasenbelagsseite großflächig und konzentrisch mit der Stirnkontaktschicht des X-Kondensators verbunden ist, und daß die durch die Stirnkontaktschicht des Y-Kondensator definierten Masse(PE)-Belagsseite des Y-Kondensators großflächig mit dem Gehäuse verbunden ist.

Weiterbildungen der Erfindung bestehen darin, daß die X-Kondensatoren symmetrisch am Y-Kondensator angeordnet sind und daß gegebenenfalls auf die Phasenleiter Ferritkerne aufgeschoben sind.

Die Erfindung wird anhand der folgenden Ausführungsbeispiele erläutert.

In der dazugehörenden Zeichnung zeigen:
Fig.1 einen Mehrfach-Durchführungskondensator in Draufsicht,
Fig.2 eine Seitenansicht des in Fig.1 gezeigten Kondensators.

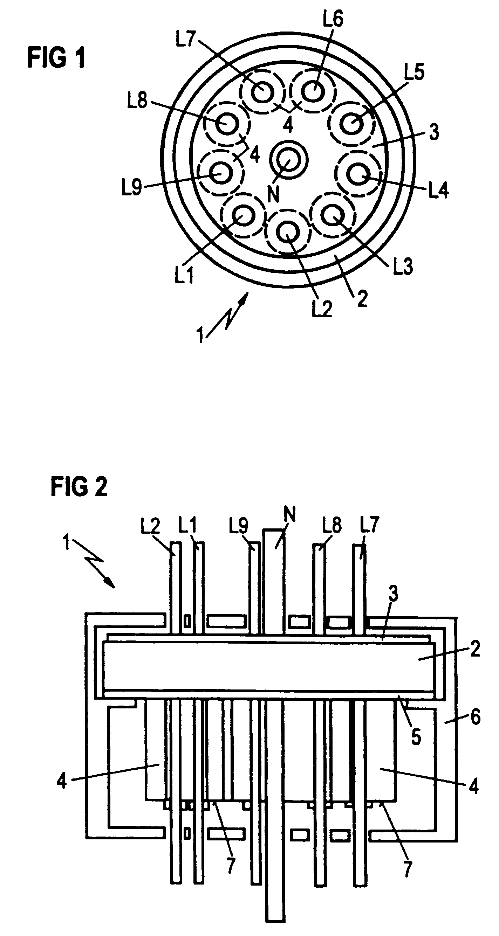

In der Fig.1 ist ein Mehrfach-Durchführungskondensator 1 in Ansicht von der N-Seite dargestellt. Er besteht aus einem Y-Kondensator 2 an dessen einer Stirnseite neun X-Kondensatoren 4 befestigt sind, indem ihre mit Schoopschichten versehenen Stirnseiten großflächig mit der ebenfalls mit einer Schoopschicht versehenen Stirnseite 3 des Y-Kondensators verbunden werden. Die Stirnseite 3 ist der N-Belag des Y-Kondensators 2 und stellt das N-Potential des Mehrfach-Durchführungskondensators 1 dar. Der N-Leiter N wird ebenfalls großflächig mit der Stirnseite 3 verbunden und durch den freien Raum der X-Kondensatoren durchgeführt. Die neun Phasenleiter L1......L9 werden durch das jeweilige Kernloch der X-Kondensatoren 4 geführt und auf der Phasenbelagsseite großflächig mit den entsprechenden Schoopschichten verbunden.

In Fig.2 ist der Mehrfach-Durchführungskondensator in Seitenansicht dargestellt. Die Stirnkontaktschicht 5 des Y-Kondensators bildet das PE(Masse)-Potential und ist großflächig mit dem HF-dicht umschließenden Gehäuse 6 verbunden. Die Stirnflächen 7 der X-Kondensatoren 4 stellen ihre Phasenbelagsseiten dar.

Auf die Leiter N,L1.......L9 können gegebenfalls Ferritkerne aufgebracht werden, so daß ein Mehrfach-Durchführungsfilter erhalten wird.

Durch die in den Ausführungsbeispielen beschriebene Lösung ist es möglich, EMV- und Schutzfilter in kompakter Bauform wirtschaftlich herzustellen. Auch können Systeme und Anlagen EMV-technisch behandelt werden.

Der dargestellte Mehrfach-Durchführungskondensator 1 ist als n-facher Durchführungskondensator aufgebaut und extrem ableitstromarm. Er besitzt eine umschließende HF-dichte Hülle (Gehäuse 6) gemeinsam für den Y-Kondensator 2 und alle X-Kondensatoren 4, wobei das elektrische Potential dieser Hülle gleich dem Masse(PE)-Potential ist.

Bei einem Aufbau z.B. als (m¹.n¹) + (m².n²) +...+ (mⁿ.nⁿ) = p-Leiter-Durchführungskondensator [wobei m=Anzahl der Anschlußsysteme, n=Anzahl der für ein Anschlußsystem benötigten Leitungen und p=Anzahl der Durchführungskondensatoren ist], kann auf einfache Weise ein System mit mehreren, unterschiedlichen Zuleitungen gefiltert werden, wie z.B. ein drehzahlveränderbarer Motor.

Die Stromstärken können durch Parallelschaltung der X-Kondensatoren 4 [z.B. (L1,L4,L7) + (L2,L5,L8) + (L3,L6,L9)] nahezu verdreifacht werden. Neben der aufgeführten Kombination sind auch andere Varianten möglich, [z.B. Kombination als 2- + 4- + 3-Leiter usw.] oder als Drehstrom- und Gleichstrom-Ausführung.

Weiterhin ist es möglich, durch Verbindung des N- und der jeweiligen PE-Leiter Steuerleitungs-Durchführungskondensatoren (bei der Ausführungsform nach Fig.1 und 2 neun Stück) zu erhalten, die allerdings nicht ableitstromarm sind.

Auch bei den zuletzt genannten Ausführungsformen können durch den Einbau von Ferritkernen ohne größeren Aufwand Mehrfach-Durchführungsfilter erhalten werden.

## Patentansprüche

1. Mehrfach-Durchführungskondensator für Leitungen mit einem N-Leiter und n, n≥1, Phasenleitern sowie gegebenenfalls einem PE-Leiter für EMV- und Schutzfilter zum Einsatz bei geschirmten Räumen, Systemen und Anlagen, der HF-dicht in ein metallisches Gehäuse eingebaut ist und aus zumindest jeweils einem X- und Y-Kondensator besteht, die als Wickelkondensatoren ausgebildet sind und an ihren Stirnseiten Stirnkontaktschichten aufweisen, wobei
an einer Stirnseite (3) des Y-Kondensators (2) für jeden Phasenleiter (L1....L9) ein X-Kondensator (4) mit seiner einen Stirnseite angeordnet ist, die zueinander angeordneten Stirnkontaktschischten der X- (4) und Y- (2) Kondensatoren großflächig miteinander verbunden sind, an diesen Stirnkontaktschichten der N-Leiter (N) großflächig angeschlossen ist, der N-Leiter (N) durch die Mitte des Y-Kondensators (2) durchgeführt ist, der jeweilige Phasenleiter (L1....L9) durch ein Kernloch des entsprechenden X-Kondensators (4) geführt und auf der durch die Stirnkontaktschicht (7) des X-Kondensators definierte Phasenbelagsseite großflächig mit der Stirnkontaktschicht (7) des X-Kondensators (4) verbunden ist, und die durch die Stirnkontaktschicht (5) des Y-Kondensators definierte Masse (PE)-Belagsseite des Y-Kondensators (2) großflächig mit dem Gehäuse (6) verbunden ist.

2. Mehrfach-Durchführungskondensator nach Anspruch 1,
**dadurch gekennzeichnet**,
daß die X-Kondensatoren (4) symmetrisch am Y-Kondensator (2) angeordnet sind.

3. Mehrfach-Durchführungskondensator nach Anspruch 1 oder 2
**dadurch gekennzeichnet,**
daß auf den Phasenleitern (L1....L9) Ferritkerne angeordnet sind.

4. Mehrfach-Durchführungskondensator nach einem der Ansprüche 1 bis 3,
**dadurch gekennzeichnet,**
daß einzelne X-Kondensatoren (4) parallel geschaltet sind.

5. Mehrfach-Durchführungskondensator nach einem der Ansprüche.1 bis 4,
**dadurch gekennzeichnet,**
daß N- und PE-Leiter miteinander verbunden sind.

## Claims

1. Multiple bushing capacitor for cables having an N-conductor and n, n≥1, phase conductors as well as, if appropriate, a PE conductor for EMC and protective filters for use in screened spaces, systems and installations, which is installed in an RF-tight fashion in a metallic container and comprises at least in each case one X capacitor and Y capacitor which are constructed as roller-type capacitors and have butting-contact layers on their end faces, in which an X capacitor (4) is arranged with one of its end faces on an end face (3) of the Y capacitor (2) for each phase conductor (L1...L9), in which the mutually assigned butting-contact layers of the X (4) and Y (2) capacitors are interconnected over a large area, in which the N conductor (N) is connected over a large area to these butting-contact layers, in which the N conductor (N) is guided through the middle of the Y capacitor (2), in which the respective phase conductor (L1....L9) is guided through a core hole of the corresponding X capacitor (4) and is connected over a large area to the butting-contact layer (7) of the X capacitor (4) on the phase coating side defined by the butting-contact layer (7) of the X capacitor, and in which the earth (PE) coating side, defined by the butting-contact layer (5) of the Y capacitor, of the Y capacitor (2) is connected over a large area to the container (6).

2. Multiple bushing capacitor according to Claim 1, characterized in that the X capacitors (4) are arranged symmetrically on the Y capacitor (2).

3. Multiple bushing capacitor according to Claim 1 or 2, characterized in that ferrite cores are arranged on the phase conductors (L1...L9).

4. Multiple bushing capacitor according to one of Claims 1 to 3, characterized in that the individual X capacitors (4) are connected in parallel.

5. Multiple bushing capacitor according to one of Claims 1 to 4, characterized in that the N and PE conductors are interconnected.

## Revendications

1. Condensateur avec traversées multiples pour des câbles comportant un conducteur neutre et n, n ≥1, fils de phase ainsi que, le cas échéant, un conducteur de protection pour filtres de compatibilité électromagnétique et de protection aux fins d'utilisation dans des espaces, des systèmes et des installations blindés, qui est monté dans un boîtier métallique de manière étanche aux hautes fréquences et qui se compose à chaque fois d'au moins un condensateur X et d'un condensateur Y, qui sont conçus comme des condensateurs bobinés et présentent sur leurs faces frontales des couches de contact frontales, dans lequel un condensateur X (4) est disposé par sa face frontale sur une face frontale (3) du condensateur Y (2) pour chaque fil de phase (L1....L9), les couches de contact frontales disposées ensemble des condensateurs X (4) et Y (2) sont reliées ensemble par une grande surface, le conducteur neutre (N) est raccordé par une grande surface à ces couches de contact frontales, le conducteur neutre (N) passe par le milieu du condensateur Y (2), le fil de phase respectif (L1....L9) est guidé dans un avant-trou du condensateur X correspondant (4) et, sur le côté de l'armature de phase définie par la couche de contact frontale (7) du condensateur X, est relié par une grande surface à la couche de contact frontale (7) du condensateur X (4), et le côté de l'armature de la masse (PE) du condensateur Y (2) défini par la couche de contact frontale (5) du condensateur Y est relié au boîtier (6) par une grande surface.

2. Condensateur avec traversées multiples selon la revendication 1, caractérisé en ce que les condensateurs X (4) sont disposés symétriquement au condensateur Y (2).

3. Condensateur avec traversées multiples selon la revendication 1 ou 2, caractérisé en ce que sur les fils de phase (L1....L9) sont disposés des noyaux en ferrite.

4. Condensateur avec traversées multiples selon l'une des revendications 1 à 3, caractérisé en ce que différents condensateurs X (4) sont montés en parallèle.

5. Condensateur avec traversées multiples selon l'une des revendications 1 à 4, caractérisé en ce que des conducteurs neutres et de protection sont reliés ensemble.
